# EUROPEAN PATENT SPECIFICATION

(11) **EP 2 870 851 B1**
(45) Date of publication and mention of the grant of the patent: **19.12.2018**
(21) Application number: 14192275.7
(22) Date of filing: 07.11.2014
(51) Int. Cl.: A01C 23/04

(54) **Arrangement for filling a tank on a tanker, preferably a slurry tanker, and method for filling such a tank**
Vorrichtung zur Befüllung eines Tanks an einem Tankwagen, vorzugsweise eines Schlämmewagens und Verfahren zum Befüllen solch eines Tanks
Dispositif pour le remplissage d'un réservoir sur un camion-citerne, de préférence un camion-citerne de boue, et procédé de remplissage d'un tel réservoir

(30) Priority: 08.11.2013 DK 201370659
(43) Date of publication of application: 13.05.2015
(73) Proprietor: Samson Agro A/S, 8800 Viborg (DK)
(72) Inventor: Larsen, Thomas Søndergaard Borg, 8620 Kjellerup (DK)
(74) Representative: Nielsen, Leif

(56) References cited:
- WO-A1-2004/010006
- WO-A1-2007/143994
- DE-A1- 2 451 529
- DE-C1- 4 108 549

## Description

### Field of the Invention

The present invention concerns an arrangement for filling a tank in a tanker, preferably a slurry tanker, with liquid such as water containing varying amounts of contaminants, the arrangement including:
- a feed line with a filling pump for pumping the liquid to the tank;
- a discharge line with an emptying pump for pumping the liquid out of the tank;
- a return line to the tank associated with the emptying pump;
- an ejector provided in the return line;
- a suction line connected with the suction side of the ejector for aspirating the liquid through the filling pump; and
- valves for optionally shutting off/opening connections between the ejector, the pumps and the tank, said valves including:
- a first valve between the emptying pump and the ejector
- a second valve between the filling pump and the ejector and
- a third valve between the ejector and the tank.

The invention furthermore concerns a method for filling a tank in a tanker, preferably a slurry tanker, with liquid such as water containing varying amounts of contaminants, which tank is connected with an arrangement including:
- a feed line with a filling pump for pumping the liquid to the tank;
- a discharge line with an emptying pump for pumping the liquid out of the tank;
- a return line to the tank associated with the emptying pump;
- an ejector provided in the return line;
- a suction line connected with the suction side of the ejector for aspirating the liquid through the filling pump; and
- valves for optionally shutting off/opening connections between the ejector, the pumps and the tank, said valves including:
- a first valve between the emptying pump and the ejector
- a second valve between the filling pump and the ejector and
- a third valve between the ejector and the tank;
by which method there is provided an ejector action in a return line connecting the emptying pump with the tank, wherein this ejector action is used for establishing a vacuum in the suction line for aspirating the liquid through the filling pump.

### Background of the Invention

The pump arrangements of the kind mentioned in the introduction are particularly suitable in the agricultural area. The liquid will therefore often be slurry. However, the system can also find application in connection with other liquids that contain varying amounts of contaminants that may have influence on the pumps.

Various types of filling pumps are known. Some of these are mounted on the tanker, e.g. via a top arm, which is disposed upon the tank, or other filling pumps mounted stationary in the containers containing the liquid to be pumped into the tank.

It is known with systems arranged with an air vacuum pump which establishes an underpressure in the whole tank. The entire tank is then, however, to be a pressurised container which may give rise to safety concerns.

A different system for filling the tank is to use shear pumps which can be of screw or rotary piston type. These will usually also be mounted on the tanker and be powered by the engine of a tractor towing the tanker or by the engine of a self-propelled tanker. If the case is a tractor- towed tanker, the power take-off of the tractor will usually be applied to drive such a pump. Such a pump will usually have capacity to pump air and suck out the air initially found in the piping system that connects the tank with the container to be emptied, which is often disposed at a lower level and often at a distance from the pump itself. These pump types, however, have the drawback that they are prone to become damaged if they run dry, and they can be damaged by solids in the liquid as well.

Another type of pump, namely centrifugal or turbo pumps, are also used. However, these cannot evacuate the air found in the pipe system. Such pumps will therefore be adapted to be submerged into the liquid to be pumped into the tank and therefore be connected with the outermost end of the lines, which usually is a top arm as mentioned above. Such a pump is commonly driven by a hydraulic motor which is supplied with drive fluid from a tractor or a self-propelled tanker. However, the centrifugal pump can also be mounted on the tanker in the same way as a displacement pump and can be driven in the same way. In this situation it is required that the pump and the suction line at first are primed with liquid in one or the other way in order to enable the pump to suck the liquid from the container into the tank. For this application, use of an ejector has been suggested previously. An emptying pump used for emptying the tank is applied when a return line to the tank has been provided. When the ejector is disposed in a return line to the tank, it will be possible to use a residual amount of liquid in the tank which via the emptying pump is pumped through the return line and thereby the ejector. When the suction side of the ejector is connected with a feed line in which the filling pump is disposed, a priming of the filling pump as well as suction line and feed line to the tank will be effected. Such a system is e.g. described in WO 03/083310 and WO 07/143994. By these prior art systems is mentioned the possibility of only using the ejector for filling. However, such a filling operation will be relatively slow as the capacity of an ejector pump is limited. The time in which the tanker stands still in order to be filled is regarded as wasted time and is desired to be reduced as much as possible.

By the prior art systems it is thus proposed that after aspirating the filling pump and the lines to the tank, a switching is performed such that the filling pump is used for filling the tank.

In the prior art systems, in the discharge line at the delivery side of the emptying pump there will be provided a valve that can be set to send the liquid through the ejector or to shut off the ejector and send the liquid through the discharge line for emptying the tank. This can e.g. be effected when spreading on a field, but alternatively also just by emptying the liquid from the tank into a receiving container.

In the feed line on the delivery side of the filling pump a valve is provided. This valve shuts off the feed line at start-up during aspiration of the filling pump and the feed line. After aspiration, the setting of this valve is changed such that the connection to the filling pump is opened, and the feed line is connected directly to the tank hereby.

By such a system it is possible to fill a tanker by means of a non-self-priming filling pump, even if this filling pump cannot be submerged in the liquid to be pumped into the tank. The filling pump may thus be filled with liquid without having to be lowered into the liquid container.

In order to fill the pump with liquid without need to submerge it into the liquid container, a return line to the tank is provided in connection with the emptying pump. In this return line an ejector is provided, connected to a pressure source for a medium for establishing ejector action. The ejector has a suction line which via a shut-off valve can be connected to the filling pump for aspirating the liquid through the filling pump.

The ejector/ejector action provides for filling the filling pump after which it can be used for filling the tank in the usual way. The medium used for establishing the ejector action may either be a residual amount of liquid in the tank or pressurised air from a compressor.

As mentioned, the time used for pumping and filling the tank should be reduced as much as possible. It is therefore desired to use a filling pump with high capacity.

However, by the prior art systems there will also be a risk that the filling pump can become clogged when large lumps of contamination arrive and/or there is a risk of cavitation of the filling pump. The capacity is appreciably reduced hereby, and since the ejector is uncoupled, a restart will be required if the feed line and/or the filling pump runs dry. Therefore it is realised that it may be advantageous to keep the emptying pump running so that the ejector is kept activated. However, this requires a complicated control of valves between the feed line and the tank. As the efficiency of a filling pump, which is a centrifugal pump, is typically about 5 times greater than the efficiency of an ejector, it is desirable that filling is performed by the filling pump and that the latter is kept running during the filling of the tank.

It is desired to reduce the number of valves and the need for control and thereby to achieve a more robust arrangement with possible reliability contributing to optimise the time that is used for filling the tank.

### Object of the Invention

It is the object of the present invention to indicate an arrangement of the kind indicated in the introduction, e.g. WO 2007/143994 where these drawbacks are relieved and to indicate an arrangement which is more simple and which has greater reliability than the prior art arrangements.

### Description of the Invention

This is achieved according to independent claims 1 and 7 of the present invention by an arrangement of the kind mentioned in the introduction which is peculiar in that the suction line is identical to the feed line such that the filling pump only pumps liquid to the tank via the ejector.

The method according to the invention is peculiar in that the liquid is only pumped to the tank via the ejector as the suction line is identical to the feed line.

By a system according to the invention it is still possible to fill a tanker by means of a non-self-priming filling pump, even if this filling pump cannot be submerged in the liquid to be pumped into the tank. The filling pump may thus be filled with liquid without needing to be lowered into the liquid container.

When the filling pump is aspirated and actively pumps liquid into the tank, the liquid will continuously be pumped into the tank via the ejector. The suction line is now supplied with the liquid under pressure from the filling pump, thereby in principle acting as feed line to the tank. The capacity of the filling pump is greater than the capacity of the ejector. This means that the emptying pump via the ejector only provides a small contribution to the filling.

It will be possible to switch off the ejector by closing the valve in the return line and at the same time stop the emptying pump.

In practice it is preferred that the valve in the return line is kept open. Filling of the tanks will hereby not occur by means of the filling pump only. The ejector will still be active as the emptying pump is still activated and thereby pumps liquid through the return line, producing an ejector action that contributes to the filing of the tank. Filling of the tank can thus be effected with contributions from both the ejector and the filling pump which are both filling the tank. The time used for filling the tank is reduced hereby.

If the filling pump cavitates, the ejector action will ensure continued filling of the tank and aspiration of the filling pump such that the latter will automatically take over the greater part of the filling again without any need for controlling valves. In this situation it will thus also be possible to reduce the time used for filling the tank. Filling can alternatively occur by ejector action only.

According to a further embodiment, the method according to the invention is peculiar in that the liquid is pumped into the tank via a feed manifold having an outlet opening that opens into the tank, and that the feed manifold has inlet openings that are optionally connected with a filling pump in a side arm or in a top arm, or is connected with a suction hose without a filling pump by suitable setting of the valves of the arrangement.

According to a further embodiment, the method according to the invention is peculiar in that the feed line includes a feed manifold having an outlet opening that opens onto the tank, and inlet openings that are optionally connected with a filling pump in a side arm or in a top arm, or is connected with a suction hose without a filling pump, respectively.

By using a feed manifold, this may be provided a proper size so as to contain a sufficient amount of liquid for aspirating the filling pump. A user of the tanker therefore does not need to terminate spreading the liquid from the tank in order to ensure presence of a residual amount sufficient for aspiration being left in the tank. The tank may simply be emptied completely. Such an assessment can be difficult and provide a risk of an insufficient residual amount left in the tank or of too large a residual amount left such that the tank capacity is not utilised optimally.

The outlet to the tank from the feed manifold passes through the suction side of the ejector and on through the outlet from the ejector. Usually, a shut-off valve will be provided either before the outlet of the ejector or between the ejector and the manifold for retaining slurry in the manifold and possibly in the ejector as well. The filling process is hereby initiated faster.

According to a further embodiment, the arrangement according to the invention is peculiar by further including a side arm line with a filling pump, which is a side arm pump, for pumping the liquid to the tank, and a valve for optionally shutting off/opening the inlet opening between the side arm line and the feed line. The tanker can hereby optionally be used for filling by means of the filling pump which is associated with a top arm (called a pump tower by some producers) disposed upon the tank or by means of the side arm line and the filling pump of the side arm. In both cases the emptying pump and the ejector will be used for aspirating the filling pump and contribute to filling the tank. Alternatively, these arrangements can be combined with a suction hose operating by ejector action only without a filling pump.

According to a further embodiment, the arrangement according to the invention is peculiar in that between the side arm line and the feed line and the feed manifold, respectively, there is provided a pivot joint allowing the side arm line to pivot, preferably in a vertical plane, relative to the feed line and the feed manifold, respectively. The side arm line can hereby in a simple way be pivoted out from the tank into a suitable angular position when filling the tank and back to a position in front of the tank such that the width of the tanker is not increased during transport.

According to a further embodiment, the arrangement according to the invention is peculiar in that the feed manifold is permanently connected with the tank at this front end and that the outlet opening of the feed manifold opens onto the bottom of the tank.

According to a further embodiment, the arrangement according to the invention is peculiar in that the tanker is a slurry tanker and that the ejector is provided inside the tank at a position close to the bottom thereof. By disposing the ejector and the inlet for the tank close to the bottom of the tank, foaming will be reduced when the slurry tanker is filled.

Alternatively, the ejector can also be located outside the tank.

### Description of the Drawing

The invention will be explained in more detail below with reference to the accompanying drawing, wherein:
- Fig. 1: shows a schematic drawing of a tanker in the form of a slurry tanker according to prior art;
- Figs. 2-3: show schematic drawings corresponding to Fig. 1 of a slurry tanker with an arrangement according to the present invention;
- Fig. 4: shows a perspective view of a slurry tanker with an arrangement according to the invention; and
- Figs. 5-8: show partially transparent, perspective views of an arrangement for the slurry tanker shown in Fig. 4.

### Detailed Description of Embodiments of the Invention

Identical or corresponding elements will be designated with the same reference numerals in the different figures of the drawing.

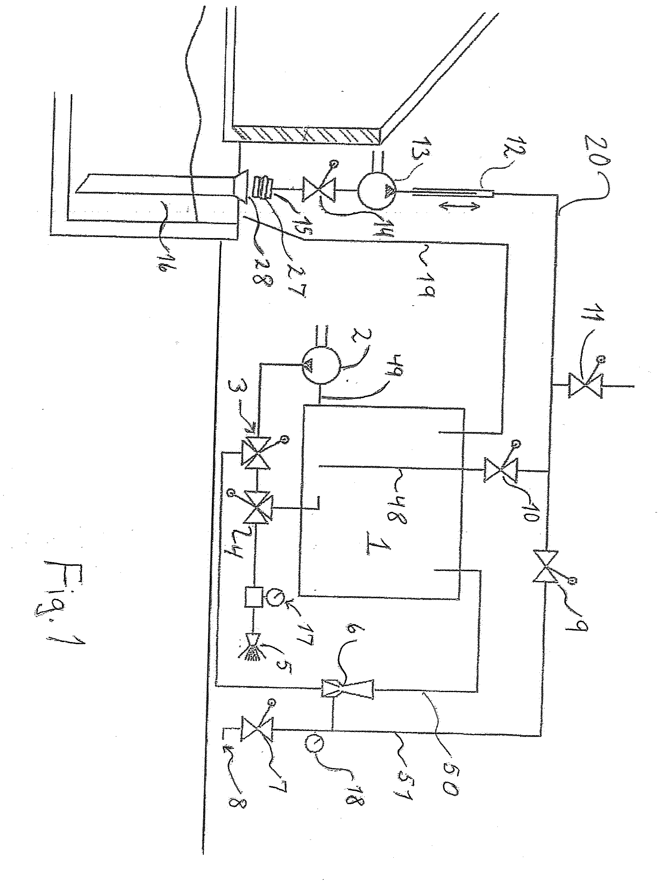

In Fig. 1 of the drawing appears a schematic drawing showing valve arrangements and piping for a slurry tanker according to prior art.

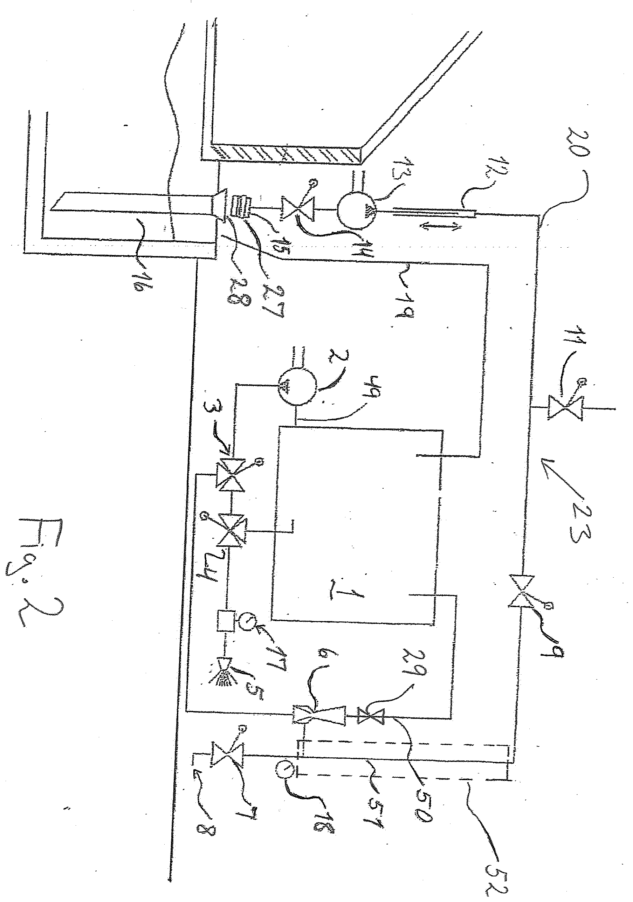

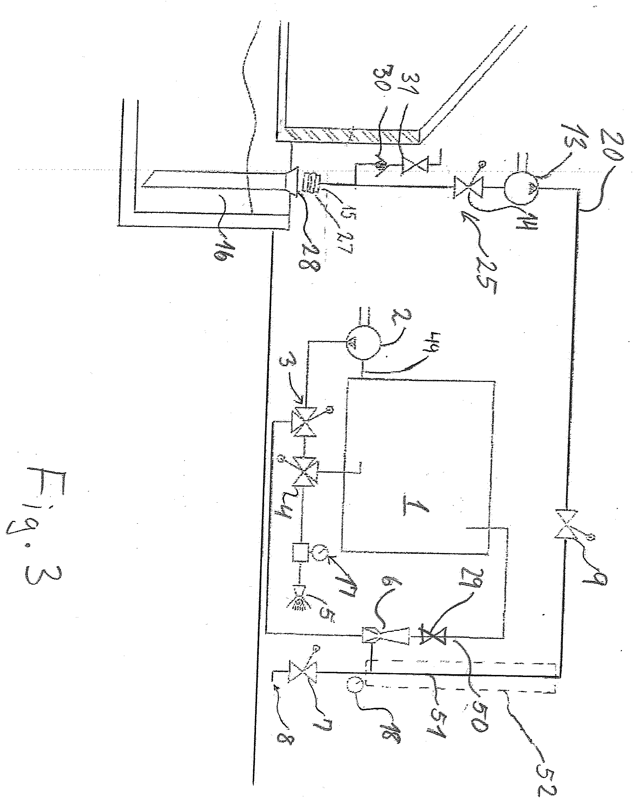

This arrangement is shown in modified from in Figs. 2 and 3.

In Fig. 1, the following elements appear:

Tank 1 of slurry tanker to be filled. When ejector 6 is to be used, one has to start with a suitable amount of liquid in the tank 1.

Slurry pump 2 pumping slurry out of the slurry tank 1 via a discharge line 49. The slurry pump 2 is therefore an emptying pump. The emptying pump 2 can be driven by hydraulics, electricity or the power take-off of the tractor.

Three-way valve 3 that may be used for choosing between using ejector system or normal spreading.

Three-way valve 4 used for regulation of dose when spreading on a field.

Spreader 5 for spreading on field.

Ejector 6 used at initial suction for filling the tank 1. By circulating through the ejector 6, vacuum arises in suction line 51 and in valves 7 and 9. The ejector 6 is disposed in a return line 50 to the tank 1.

Slurry valve 7 providing the possibility of sucking through hose, e.g. manually mounted for emptying from smaller containers (not shown).

Coupling 8 for use in mounting hose.

Slurry valve 9 provides the possibility of sucking through suction line/hose 20 on the top arm of the slurry tanker which in a known way is coupled to the funnel 28 with associated suction line disposed in a slurry container 16 to be emptied.

Slurry valve 10 which closes normal connection between a feed line 48 and the hose 20 on the top arm of the slurry tanker to the tank 1 of the slurry tanker. By closed slurry valve 10, the slurry can be aspirated and lifted up to a non-self-priming filling pump 13.

Air valve 11 which is closed when sucking, and which is opened when the tank 1 is full so that the slurry in the hose 20 of the top arm can run back to the slurry container 16. The air valve provides for avoiding siphoning effect and emptying the tank 1 of the slurry tanker. The slurry from the top arm hose 20 is delivered deeply in the slurry tanker tank 1 in order to avoid foaming.

Extension 12 on the top arm for adapting to various positions of slurry containers 16. The extension 12 is to be 100% tight in order to obtain aspiration.

Filling pump 13 which is normally submerged in the slurry in the slurry container 16. The filling pump is not self-priming and is preferably liquid-driven.

Slurry valve 14 disposed at the extreme end of the hose 20. By closing the slurry valve 14, one may let the hose 20 of the top arm be full with slurry after filling. With the valve 14 closed, the top arm may be aspirated during transport. Thereby, the aspiration time is reduced at the next filling. When the valve 14 is closed, waste is also reduced when coupling 27 and 28 are separated.

Coupling 27 towards the slurry container 16. The coupling 27 is to be tight in order to obtain enough vacuum to lift the slurry up from the slurry container 16 to the filling pump 13. This normally occurs by pressing the top arm coupling 27 against the coupling 28 of the slurry container. The coupling 27 is equipped with a flexible rubber joint 15.

Flow meter 17 measuring the amount of slurry spread.

Manometer 18.

Return line 19 from the slurry tanker tank 1 to the slurry container 16.

Normally, the valves 3, 4, 9, 11, 14 are remotely controlled as they are to be operated at each filling of the tank 1. The valves 7, 9 are normally manually operated, as they are only operated in another method of filling.

In order to fill the filling pump 13 with slurry without the need of lowering into the slurry container 16, a return line 50 to the tank is provided in connection with the emptying pump 2. In this return line 50, an ejector 6 is disposed and connected to a pressure source for a medium for establishing ejector action. The ejector has a suction line 51 which via a shut-off valve 9 can be connected to the filling pump 13 for aspirating the slurry through the filling pump 13.

Fig. 2 shows a schematic drawing corresponding to Fig. 1 of an arrangement according to the present invention. A schematic drawing for the arrangement in a tanker is shown here with a top arm with the hose 20 and the extension 12.

Alternatively, the top arm can be of the type without extension.

Compared with the prior art arrangement, this arrangement is modified in that the side line from the suction line 51 with the valve 10 is omitted such that only the suction line 51 is used for filling the tank 1. The feed line is, as shown with broken lines, a manifold 52 only constituting a part of the suction line 51.

The manifold 52 will preferably be a container which is permanently connected with the tank 1.

The valve 3 in the return line may remain open for maintaining the ejector action throughout the filling of the entire tank. The suction line 51 is now supplied with the liquid under pressure from the filling pump 13, thereby in principle acting as feed line to the tank 1. The capacity of the filling pump 13 is higher than the capacity of the ejector 6. This means that the emptying pump 2 only gives a small contribution to the filling when running. It will be possible to switch off the ejector by closing the valve 3 in the return line 50 and at the same time stop the emptying pump 2.

In front of the outlet of the ejector is disposed a shut-off valve 29. The shut-off valve 29 may alternatively be disposed between the ejector and the manifold 52. The shut-off valve is used for shutting off such that a residual amount of slurry will remain in the manifold 52 and possibly also in the ejector 6 such that a subsequent filling operation can be effected faster. In practice, the outlet opening from the manifold is disposed at the bottom of a box-shaped manifold such that a considerable residual amount of slurry can be retained in the manifold 52. After finishing filling of the tank 1, the valve 29 is closed and the valve 3 is set in position for spreading.

Fig. 3 shows another schematic drawing corresponding to Fig. 1 of an arrangement according to the present invention. A schematic drawing for the arrangement in a tanker is shown here with a side arm 25 with the hose 20. There is no extension here, but the side arm 25 may alternatively be provided with an extension.

After the valve 14, in a side line for the hose 20 there is provided a check valve 30 and a shut-off valve 31. When aspirating and filling with filling pump 13, valve 14 is open and valve 31 is closed. When the filling is ended and before separation of couplings 27 and 28, valve 14 is closed and valve 31 is opened such that the amount of slurry under valve 14 is allowed to return to the container 16, and waste is avoided. When filling from containers above the ground where a pressure above atmospheric pressure is present at coupling 28, check valve 30 prevents the slurry from running out of valve 31 when the latter is opened at the same time as the valve 14 is closed. By tanks above the ground, coupling 28 is provided with a shut-off valve.

The arrangement shown in Fig. 3 is also modified in that the side line with the valve 10 is omitted such that only the suction line 51 is used for filling the tank 1. The feed line is, as shown with broken lines, with a manifold 52 just constituting a part of the suction line 51.

The mode of operation will be analogous to the one described for the arrangement shown in Fig. 2.

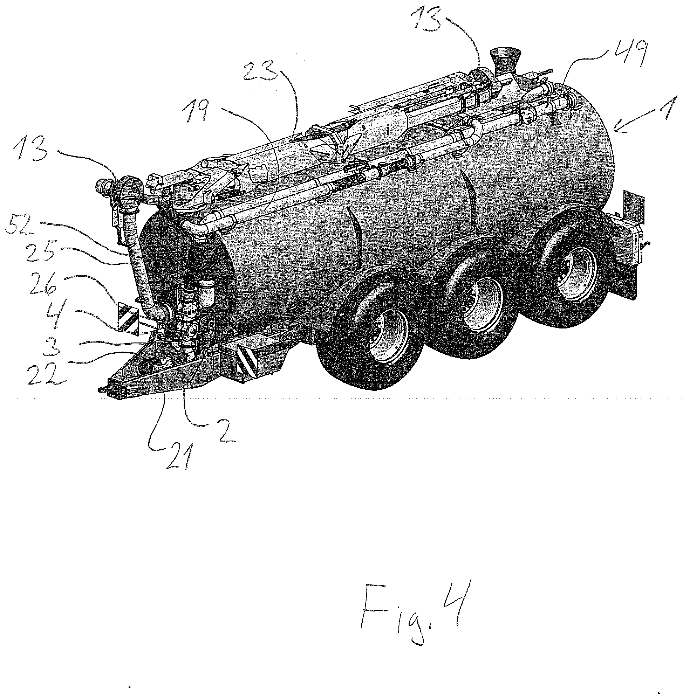

Fig. 4 shows a slurry tanker with an arrangement according to the present invention. The slurry tanker is towed by tractor via a drawbar 21. The emptying pump 2 has a shaft 22 connected with power take-off on the tractor. The slurry tanker has a top arm 23 supporting the hose 20 and connected to a return line 19 for returning excessive slurry and foam to the container 16.

At the front end, the slurry tanker is provided with a side arm 25 which via a pivot joint 26 is connected with the feed line which is here provided as a container-shaped housing 52 at the front end of the slurry tanker. The side arm 25 is provided with a filling pump 13 being a side arm pump which is not self-priming, and which therefore also can be primed by means of the ejector 6 by setting the valves of the arrangement. The slurry tanker can therefore optionally be filled by means of the filling pump 13 or only by the ejector if the slurry is not pumpable with the filling pump 13.

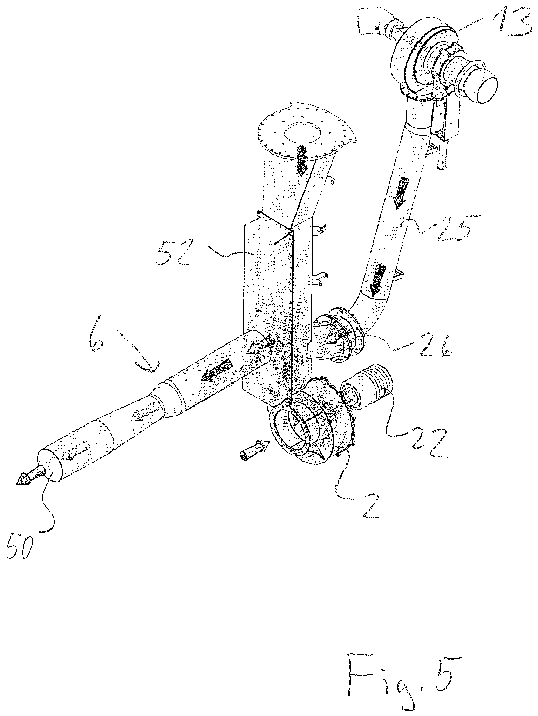

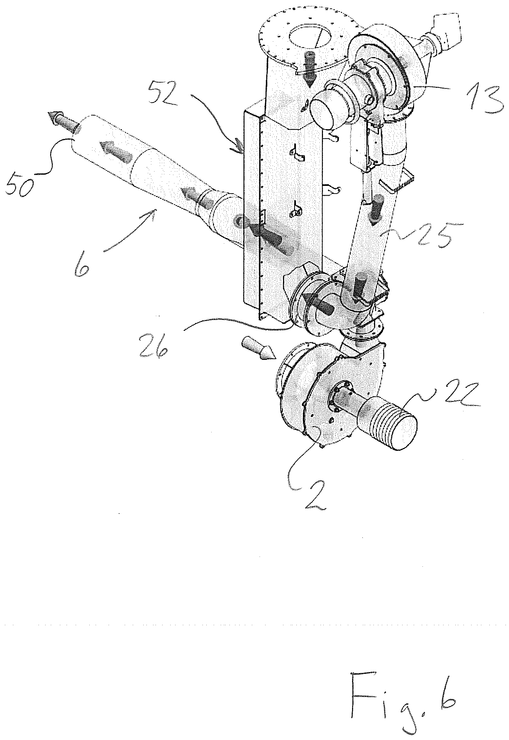

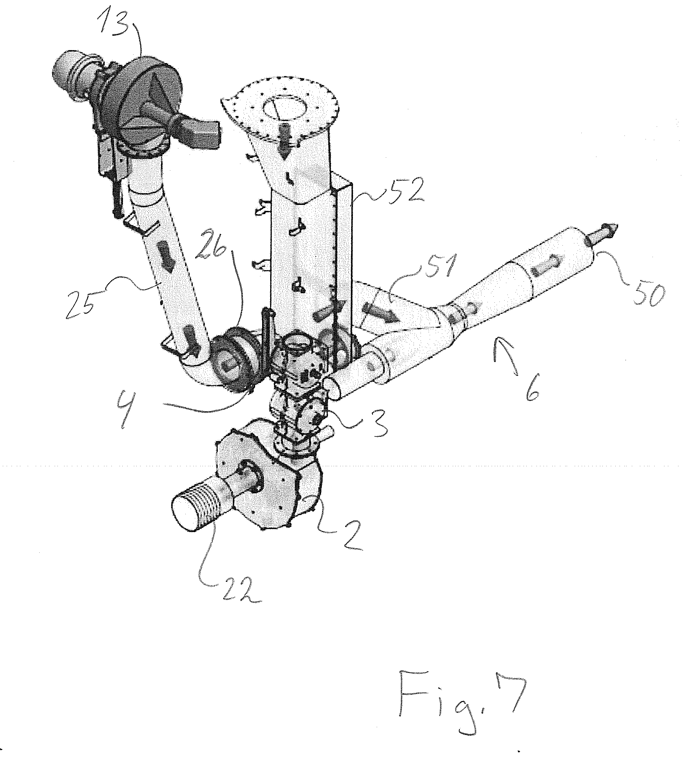

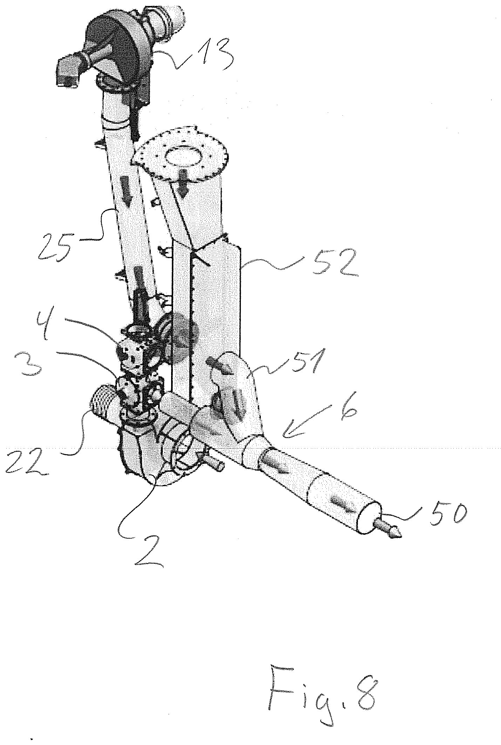

Figs. 5-8 show perspective views that are partially transparent for more clearly showing the arrangement in Fig. 4. Thus no detailed explanation is given to each of these Figures.

In the following there is described a situation of use of the arrangement according to the invention where no risk of cavitation exist.

The slurry is spread on the field. When an appropriate amount of slurry is left in the tank 1 of the slurry tanker, the spreading is stopped, and one returns to the slurry container 16 which is to be emptied. By an appropriate amount is meant an amount which is sufficient to get the ejector 6 to operate in a satisfactory way. Part of or all of this residual amount can be located in the manifold 52.

The valve 9 is opened.

The top arm places the coupling 27 in filling position so that the coupling 27 is tight. This normally occurs by pressing the top arm coupling 27 against the coupling 28 of the slurry container.

The flexible rubber joint 15 is necessary for the system to operate when the slurry tanker rocks and sinks down in the suspension due to increased load. The top arm can have appreciable length, and therefore the position of the coupling 27 can be released from engagement with the coupling 28 of the slurry container if the flexible rubber joint 15 had not been provided.

The valve 14 is opened and, like the valve 9, is to stay in this open position during the entire filling operation. The valve 11 is shut.

The slurry tanker is now ready for filling by using the ejector 6. This is done by activating the emptying pump 2 with the valve 3 in a position connecting the emptying pump 2 with the ejector 6.

The emptying pump 2 is started, and vacuum appears in the connection down to the coupling 27 by the flow of the slurry through the ejector 6 and back to the slurry tanker tank 1. When the vacuum has become sufficiently high (can be read on the manometer 18), the slurry is lifted up to the filling pump 13 of the top arm.

The filling pump 13 of the top arm is started simultaneously with the emptying pump 2.

When the slurry comes up to the filling pump 13, it will pump the slurry faster into the tank 1 of the slurry tanker than allowed by the capacity of the ejector 6, and the vacuum on the manometer 18 will drop.

When the filling pump 13 is filled with slurry, the filling pump 13 of the top arm will pump slurry from the container 16 directly into the tank 1 of the slurry tanker via the ejector 6.

When the slurry tanker tank 1 is full, the return line 19 will make the slurry run back to the slurry container 16, and possible foam formation will come out of the slurry tanker tank. Thereby 100% filling is attained.

When the tank 1 of the slurry tanker is full, the filling pump 13 of the top arm can be stopped simultaneously with opening the valve 11. Hereby, air may come into the top arm hose 20, and the slurry in the top arm hose 20 can run out without risking start of emptying the tank 1 again due to a siphoning effect. Alternatively, there may be used a valve 14 which will close when the tank 1 is full. Closing the valve 14 will also obviate the risk of emptying the tank 1 due to siphoning effect.

The top arm is placed in driving position on the slurry tanker.

The valve 3 changes position so that the slurry can be spread out on the field.

Then the above operations can be repeated.

## Claims

1. An arrangement for filling a tank (1) of a tanker, preferably a slurry tanker, with liquid such as water containing varying amounts of contaminants, the arrangement including:
- a feed line (51) with a filling pump (13) for pumping the liquid to the tank (1);
- a discharge line (49) with an emptying pump (2) for pumping the liquid out of the tank (1);
- a return line (50) to the tank (1) associated with the emptying pump (2);
- an ejector (6) provided in the return line (50); the feed line (51) being connected with the suction side of the ejector (6) for aspirating the liquid through the filling pump (13); and
- valves (3, 9, 29) for optionally shutting off/opening connections between the ejector (6), the pumps (2,13) and the tank (1), said valves including:
- a first valve (3) between the emptying pump (2) and the ejector (6)
- a second valve (9) between the filling pump (13) and the ejector (6) and
- a third valve (29) between the ejector (6) and the tank (1);
the arrangement being configured such that the filling pump (13) pumps liquid into the tank (1) only via the ejector (6) through the feed line (51).

2. Arrangement according to claim 1, **characterised in that** the feed line (51) includes a feed manifold (52) having an outlet opening that opens onto the tank (1), and inlet openings that are connected with the filling pump (13) in a side arm (25) or in a top arm (23).

3. Arrangement according to claim 1 or 2, **characterised by** further including a side arm line on a side arm (25) with the filling pump (13) constituting a side arm pump for pumping the liquid to the tank (1), and a valve (14) for optionally shutting off/opening the inlet opening between the side arm line and the feed line (51).

4. Arrangement according to claim 2 or 3, **characterised in that** between the side arm line and the feed line (51) and the feed manifold (52), respectively, there is provided a pivot joint (26) allowing the side arm line to pivot, preferably in a vertical plane, relative to the feed line (51) and the feed manifold (52), respectively.

5. Arrangement according to claim 2, 3 or 4, **characterised in that** the feed manifold (52) is permanently connected with the tank (1) at this front end and that the outlet opening of the feed manifold (52) opens onto the bottom of the tank (1).

6. Arrangement according to any preceding claim 2-5, **characterised in that** a shut-off valve (29) is disposed either before the outlet of the ejector (6) or between the ejector (6) and the feed manifold (52).

7. A method for filling a tank (1) in a tanker, preferably a slurry tanker, with liquid such as water containing varying amounts of contaminants, which tank is connected with an arrangement including:
- a feed line (51) with a filling pump (13) for pumping the liquid to the tank (1);
- a discharge line (49) with an emptying pump (2) for pumping the liquid out of the tank (1);
- a return line (50) to the tank (1) associated with the emptying pump (2);
- an ejector (6) provided in the return line (50); wherein the feed line (51) is connected with the suction side of the ejector for aspirating the liquid through the filling pump (13); and
- valves (3, 9, 29) for optionally shutting off/opening connections between the ejector (6), the pumps (2, 13) and the tank (1), said valves including:
- a first valve (3) between the emptying pump (2) and the ejector (6)
- a second valve (9) between the filling pump (13) and the ejector (6) and
- a third valve (29) between the ejector (6) and the tank (1);
by which method there is provided an ejector action in a return line (50) connecting the emptying pump (2) with the tank (1), wherein this ejector action is used for establishing a vacuum in the feed line (51) for aspirating the liquid through the filling pump (13) wherein the liquid is pumped into the tank (1) only via the ejector (6) through the feed line (51).

8. Method according to claim 7, **characterised in that** the liquid is pumped into the tank (1) via a feed manifold (52) having an outlet opening that opens into the tank (1), and that the feed manifold (52) has inlet openings that are connected with the filling pump (13) in a side arm (25) or in a top arm (23).

9. Method according to claim 7 or 8, wherein the tanker is a slurry tanker.

10. A slurry tanker with an arrangement according to any of claims 1-6.

## Patentansprüche

1. Vorrichtung zur Befüllung eines Tanks (1) eines Tankwagens, vorzugsweise eines Schlämmewagens, mit einer Flüssigkeit wie Wasser, die verschiedene Mengen Verunreinigungen enthält, wobei die Anordnung Folgendes beinhaltet:
- eine Zuleitung (51) mit einer Füllpumpe (13) zum Pumpen der Flüssigkeit in den Tank (1);
- eine Abführleitung (49) mit einer Entleerungspumpe (2) zum Herauspumpen der Flüssigkeit aus dem Tank (1);
- eine Rückführleitung (50) zum Tank (1), die der Entleerungspumpe (2) zugeordnet ist;
- ein Ejektor (6), der in der Rückführleitung (50) bereitgestellt ist; wobei die Zuleitung (51) zum Saugen der Flüssigkeit durch die Füllpumpe (13) mit der Saugseite des Ejektors (6) verbunden ist; und
- Ventile (3, 9, 29) zum optionalen Abriegeln/Öffnen der Verbindungen zwischen dem Ejektor (6), den Pumpen (2, 13) und dem Tank (1),
wobei die Ventile Folgendes beinhalten:
- ein erstes Ventil (3) zwischen der Entleerungspumpe (2) und dem Ejektor (6)
- ein zweites Ventil (9) zwischen der Füllpumpe (13) und dem Ejektor (6)
und
- ein drittes Ventil (29) zwischen dem Ejektor (6) und dem Tank (1) ;
- wobei die Anordnung so konfiguriert ist, dass die Füllpumpe (13) Flüssigkeit nur über den Ejektor (6) durch die Zuleitung (51) in den Tank (1) pumpt.

2. Vorrichtung nach Anspruch 1, **dadurch gekennzeichnet, dass** die Zuleitung (51) einen Zuführverteiler (52) beinhaltet, der eine Auslassöffnung, die sich zum Tank (1) öffnet, und Einlassöffnungen aufweist, die in einem Seitenarm (25) oder in einem oberen Arm (23) mit der Füllpumpe (13) verbunden sind.

3. Vorrichtung nach Anspruch 1 oder 2, **gekennzeichnet durch** weiteres Beinhalten einer Seitenarmleitung in einem Seitenarm (25) mit der Füllpumpe (13), die eine Seitenarmpumpe zum Pumpen der Flüssigkeit in den Tank (1) darstellt, und ein Ventil (14) zum optionalen Abriegeln/Öffnen der Einlassöffnung zwischen der Seitenarmleitung und der Zuleitung (51).

4. Vorrichtung nach Anspruch 2 oder 3, **dadurch gekennzeichnet, dass** jeweils zwischen der Seitenarmleitung und der Zuleitung (51) und dem Zuführverteiler (52) ein Drehgelenk (26) bereitgestellt ist, das es der Seitenarmleitung erlaubt zu schwenken, vorzugsweise auf einer vertikalen Ebene, jeweils relativ zur Zuleitung (51) und dem Zuführverteiler (52).

5. Vorrichtung nach Anspruch 2, 3 oder 4, dadurch ausgezeichnet, dass der Zuführverteiler (52) an diesem vorderen Ende dauerhaft mit dem Tank (1) verbunden ist und dass die Auslassöffnung des Zuführverteilers (52) sich zum Boden des Tanks (1) öffnet.

6. Vorrichtung nach einem der vorhergehenden Ansprüche 2-5, dadurch ausgezeichnet, dass ein Absperr-Ventil (29) entweder vor dem Auslass des Ejektors (6) oder zwischen dem Ejektor (6) und dem Zuführverteiler (52) angeordnet ist.

7. Verfahren zum Befüllen eines Tanks (1) in einem Tankwagen, vorzugsweise einem Schlämmewagen, mit einer Flüssigkeit wie Wasser, die verschiedene Mengen Verunreinigungen enthält, wobei der Tank mit einer Vorrichtung verbunden ist, die Folgendes beinhaltet:
- eine Zuleitung (51) mit einer Füllpumpe (13) zum Pumpen der Flüssigkeit in den Tank (1);
- eine Abführleitung (49) mit einer Entleerungspumpe (2) zum Herauspumpen der Flüssigkeit aus dem Tank (1);
- eine Rückführleitung (50) zum Tank (1), die der Entleerungspumpe (2) zugeordnet ist;
- ein Ejektor (6), der in der Rückführleitung (50) bereitgestellt ist; wobei die Zuleitung (51) zum Saugen der Flüssigkeit durch die Füllpumpe (13) mit der Saugseite des Ejektors verbunden ist; und
- Ventile (3, 9, 29) zum optionalen Abriegeln/Öffnen der Verbindungen zwischen dem Ejektor (6), den Pumpen (2, 13)
und dem Tank (1), wobei die Ventile Folgendes beinhalten:
- ein erstes Ventil (3) zwischen der Entleerungspumpe (2) und dem Ejektor (6)
- ein zweites Ventil (9) zwischen der Füllpumpe (13) und dem Ejektor (6)
und
- ein drittes Ventil (29) zwischen dem Ejektor (6) und dem Tank (1);
durch das Verfahren ist eine Ejektor-Tätigkeit in der Rückführleitung (50) bereitgestellt, die die Entleerungspumpe (2) mit dem Tank (1) verbindet, wobei diese Ejektor-Tätigkeit für das Herstellen eines Vakuums in der Zuleitung (51) zum Saugen der Flüssigkeit durch die Füllpumpe (13) verwendet wird, wobei die Flüssigkeit nur über den Ejektor (6) durch die Zuleitung (51) in den Tank (1) gepumpt wird.

8. Verfahren nach Anspruch 7, **dadurch gekennzeichnet, dass** die Flüssigkeit über einen Zuführverteiler (52), der eine Auslassöffnung aufweist, die sich in den Tank (1) öffnet, in den Tank (1) gepumpt wird, und dass der Zuführverteiler (52) Einlassöffnungen aufweist, die in einem Seitenarm (25) oder in einem oberen Arm (23) mit der Füllpumpe (13) verbunden sind.

9. Verfahren nach Anspruch 7 oder 8, wobei der Tankwagen ein Schlämmewagen ist.

10. Ein Schlämmewagen mit einer Vorrichtung nach einem der vorhergehenden Ansprüche 1-6.

## Revendications

1. Dispositif pour le remplissage d'un réservoir (1) sur un camion-citerne, de préférence un camion-citerne de boue, avec un liquide tel que de l'eau contenant diverses quantités de contaminants, le dispositif comprenant :
- une conduite d'alimentation (51) avec une pompe de remplissage (13) pour pomper le liquide dans le réservoir (1) ;
- une conduite de décharge (49) avec une pompe de vidage (2) pour pomper le liquide hors du réservoir (1) ;
- une conduite de retour (50) vers le réservoir (1) associée à la pompe de vidage (2) ;
- un éjecteur (6) aménagé dans la conduite de retour (50) ; la conduite d'alimentation (51) étant raccordée au côté d'aspiration de l'éjecteur (6) pour aspirer le liquide à travers la pompe de remplissage (13) ; et
- des vannes (3, 9, 29) pour fermer/ouvrir éventuellement les raccords entre l'éjecteur (6), les pompes (2, 13) et le réservoir (1),
lesdites vannes comprenant :
- une première vanne (3) entre la pompe de vidage (2) et l'éjecteur (6),
- une deuxième vanne (9) entre la pompe de remplissage (13) et l'éjecteur (6) et
- une troisième vanne (29) entre l'éjecteur (6) et le réservoir (1) ;
le dispositif étant configuré de sorte que la pompe de remplissage (13) pompe du liquide dans le réservoir (1) uniquement via l'éjecteur (6) à travers la conduite d'alimentation (51).

2. Dispositif selon la revendication 1, **caractérisé en ce que** la conduite d'alimentation (51) comprend un collecteur d'alimentation (52) ayant une ouverture de sortie qui débouche sur le réservoir (1) et des ouvertures d'entrée qui sont raccordées à la pompe de remplissage (13) dans un bras latéral (25) ou un bras supérieur (23).

3. Dispositif selon la revendication 1 ou 2, **caractérisé en ce qu'**il comprend en outre une conduite de bras latéral sur un bras latéral (25) avec la pompe de remplissage (13) constituant une pompe de bras latéral pour pomper le liquide dans le réservoir (1) et une vanne (14) pour fermer/ouvrir éventuellement l'ouverture d'entrée entre la conduite de bras latéral et la conduite d'alimentation (51).

4. Dispositif selon la revendication 2 ou 3, **caractérisé en ce qu'**il est prévu entre la conduite de bras latéral et la conduite d'alimentation (51) et le collecteur d'alimentation (52), respectivement, un joint pivot (26) permettant à la conduite de bras latéral de pivoter, de préférence dans un plan vertical, par rapport à la conduite d'alimentation (51) et au collecteur d'alimentation (52), respectivement.

5. Dispositif selon la revendication 2, 3 ou 4, **caractérisé en ce que** le collecteur d'alimentation (52) est raccordé en permanence au réservoir (1) à cette extrémité avant et l'ouverture de sortie du collecteur d'alimentation (52) débouche dans le fond du réservoir (1).

6. Dispositif selon l'une quelconque des revendications 2 à 5, **caractérisé en ce qu'**une vanne de fermeture (29) est disposée avant la sortie de l'éjecteur (6) ou entre l'éjecteur (6) et le collecteur d'alimentation (52).

7. Procédé de remplissage d'un réservoir (1) dans un camion-citerne, de préférence un camion-citerne de boue, avec un liquide tel que de l'eau contenant diverses quantités de contaminants, lequel réservoir est raccordé à un dispositif comprenant :
- une conduite d'alimentation (51) avec une pompe de remplissage (13) pour pomper le liquide dans le réservoir (1) ;
- une conduite de décharge (49) avec une pompe de vidage (2) pour pomper le liquide hors du réservoir (1) ;
- une conduite de retour (50) vers le réservoir (1) associée à la pompe de vidage (2) ;
- un éjecteur (6) aménagé dans la conduite de retour (50) ; la conduite d'alimentation (51) étant raccordée au côté d'aspiration de l'éjecteur pour aspirer le liquide à travers la pompe de remplissage (13) ; et
- des vannes (3, 9, 29) pour fermer/ouvrir éventuellement les raccords entre l'éjecteur (6), les pompes (2, 13) et le réservoir (1),
lesdites vannes comprenant :
- une première vanne (3) entre la pompe de vidage (2) et l'éjecteur (6),
- une deuxième vanne (9) entre la pompe de remplissage (13) et l'éjecteur (6) et
- une troisième vanne (29) entre l'éjecteur (6) et le réservoir (1) ;
par lequel procédé il est prévu une action de l'éjecteur dans une conduite de retour (50) raccordant la pompe de vidage (2) au réservoir (1), dans lequel cette action de l'éjecteur est utilisée pour établir un vide dans la conduite d'alimentation (51) pour aspirer le liquide à travers la pompe de remplissage (13), dans lequel le liquide est pompé dans le réservoir (1) uniquement via l'éjecteur (6) à travers la conduite d'alimentation (51).

8. Dispositif selon la revendication 7, **caractérisé en ce que** le liquide est pompé dans le réservoir (1) via un collecteur d'alimentation (52) ayant une ouverture de sortie qui débouche sur le réservoir (1) et le collecteur d'alimentation (52) a des ouvertures d'entrée qui sont raccordées à la pompe de remplissage (13) dans un bras latéral (25) ou un bras supérieur (23) .

9. Procédé selon la revendication 7 ou 8, dans lequel le camion-citerne est un camion-citerne de boue.

10. Camion-citerne de boue avec un dispositif selon l'une quelconque des revendications 1 à 6.
